# EUROPÄISCHE PATENTANMELDUNG

(11) **EP 4 703 103 A1**
(43) Veröffentlichungstag der Anmeldung: **04.03.2026**
(21) Anmeldenummer: 24197674.5
(22) Anmeldetag: 30.08.2024
(51) Int. Cl.: B27N 1/00, B27N 1/02, B27N 3/02, B27N 3/18, G01N 21/3554, G01N 21/3563, G01N 21/359, B27N 3/08, B27N 3/14, G01N 21/3559

(54) **VERFAHREN UND VORRICHTUNG ZUM PROZESSOPTIMIERTEN HERSTELLEN VON HOLZWERKSTOFFPLATTEN**

(71) Anmelder: Flooring Technologies Ltd., Kalkara SCM 1001 (MT)
(72) Erfinder: Noci, Fabian, 6110 Wolhusen (CH); Henning, Dirk, 5646 Abtwil (CH); Hasch, Joachim, Prof. Dr., 10317 Berlin (DE)
(74) Vertreter: Kalkoff & Partner Patentanwälte mbB

(57) **Zusammenfassung**

Die Erfindung betrifft ein Verfahren sowie eine Vorrichtung zum prozessoptimierten Herstellen von Holzwerkstoffplatten, insbesondere von Spanplatten. Um ein Verfahren sowie eine Vorrichtung zum prozessoptimierten Herstellen von Holzwerkstoffplatten bereitzustellen, die eine Qualitätsoptimierung sowie zugleich auch eine kontinuierliche Qualitätssicherung erlauben, eine besonders einfache und schnelle Bestimmung bestmöglicher Steuergrößen ermöglichen und zudem eine kontinuierliche Produktion mit geringstmöglichem Ausschuss und einer größtmöglichen Prozessstabilität gewährleisten, ist vorgesehen, dass wenigstens ein Prozessparameter, insbesondere der Wassergehalt und/oder der pH-Wert, während des Verfahrens mittels Nahinfrarotspektroskopie gemessen und die gemessenen Werte des wenigstens einen Prozessparameters an eine Steuerungseinheit zur Prozessoptimierung und/oder zur prozessoptimierten Steuerung des Verfahrens gesendet werden, wobei die Messung des wenigstens einen Prozessparameters an einer oder mehreren Positionen erfolgt, ausgewählt aus einer Position unmittelbar vor dem Beleimen, insbesondere zwischen einem Trockenrohspanbunker und der Beleimstation, einer Position unmittelbar nach dem Beleimen, insbesondere zwischen der Beleimstation und einem Spanmaterialverteiler und/oder einer Streustation, einer Position bei dem Bereitstellen unmittelbar nach einem Holzplatz, insbesondere zwischen dem Holzplatz und einem nachfolgenden Trockner, und/oder einer Position bei dem Bereitstellen unmittelbar nach einem Trockner, insbesondere zwischen dem Trockner und einer Siebstation und/oder einem Trockenrohspanbunker.

## Beschreibung

Die Erfindung betrifft ein Verfahren sowie eine Vorrichtung zum prozessoptimierten Herstellen von Holzwerkstoffplatten, insbesondere von Spanplatten.

Verfahren und Vorrichtungen zum Herstellen von Holzwerkstoffplatten und insbesondere von Spanplatten sind bereits in vielfältiger Ausgestaltung aus dem Stand der Technik bekannt. Dabei müssen zum Betrieb eines solchen Verfahrens zahlreiche Einstellungen und Steuergrößen gewählt werden, die von einer Vielzahl von Einflussgrößen, wie der Holzart, der Feuchte des verwendeten Holzes, dem pH-Wert, der Partikelgröße, der Art und Zusammensetzung des verwendeten Klebstoffs, der Klebstoffmenge, der Menge des zugegebenen Wassers, der Prozess- und Presstemperatur, des Pressdrucks, der Pressdauer sowie weiteren Parametern, abhängen.

Im Stand der Technik erfolgt daher eine regelmäßige Qualitätskontrolle der fertiggestellten Holzwerkstoffplatten sowie eine engmaschige Überwachung der Qualität nach einer vorgenommenen Änderung im Herstellungsprozess. Bereits hier besteht jedoch der Nachteil, dass typischerweise die Vorrichtungen und Verfahren des Standes der Technik kontinuierlich betrieben werden und daher zum Zeitpunkt der Qualitätskontrolle einer fertiggestellten Holzwerkstoffplatte bereits eine größere Menge entsprechender Holzwerkstoffplatten produziert wurden, sodass bis zu einer optimalen Einstellung der Steuergrößen des Verfahrens bereits eine nennenswerte Menge Holzwerkstoffplatten wenigstens mit einer verminderten Qualität und im schlimmsten Fall als Ausschussware produziert wurden. Darüber hinaus kann es auch im Rahmen von Veränderungen der Einflussgrößen während einer laufenden Produktion, beispielsweise eine sich ändernde Qualität, Holzartenzusammensetzung und/oder Feuchte des zugeführten Rohspanmaterials, dazu führen, dass sich die Produktqualität verringert, was ebenfalls erst mit einer erheblichen zeitlichen Verzögerung festgestellt werden kann.

Darüber hinaus besteht bei den Verfahren und Vorrichtungen des Standes der Technik der Nachteil, dass erst im Rahmen eines relativ langandauernden Prozesses aus einer Änderung von Steuergrößen und nachfolgenden Qualitätskontrollen der fertiggestellten Holzwerkstoffplatten ein Satz an Steuergrößen gefunden werden kann, der zu einem qualitativ hochwertigen Produkt führt.

Der Erfindung liegt daher die Aufgabe zugrunde, ein Verfahren sowie eine Vorrichtung zum prozessoptimierten Herstellen von Holzwerkstoffplatten bereitzustellen, die eine Qualitätsoptimierung sowie zugleich auch eine kontinuierliche Qualitätssicherung erlauben, eine besonders einfache und schnelle Bestimmung bestmöglicher Steuergrö-ßen ermöglichen und zudem eine kontinuierliche Produktion mit geringstmöglichem Ausschuss und einer größtmöglichen Prozessstabilität gewährleisten.

Die Aufgabe wird erfindungsgemäß durch ein Verfahren zum prozessoptimierten Herstellen von Holzwerkstoffplatten gemäß Anspruch 1 sowie durch eine Vorrichtung zum prozessoptimierten Herstellen von Holzwerkstoffplatten gemäß Anspruch 10 gelöst. Vorteilhafte Weiterbildungen der Erfindung sind in den abhängigen Ansprüchen angegeben.

Das erfindungsgemäße Verfahren zum prozessoptimierten Herstellen von Holzwerkstoffplatten, insbesondere von Spanplatten, weist als Verfahrensschritte zunächst ein Bereitstellen von Rohspanmaterial von einem Holzplatz und/oder aus einem Trockner und/oder aus einem Trockenrohspanbunker, gefolgt von einem Beleimen des Rohspanmaterials, insbesondere innerhalb einer Beleimstation, einem Aufstreuen des beleimten Spanmaterials zum Bilden eines Formstrangs, insbesondere in einer Streustation und/oder auf ein Transportband, und schließlich gefolgt von einem Pressen, insbesondere einem kontinuierlichen Pressen, des Formstrangs zu einer Holzwerkstoffplatte auf. Dabei sieht die Erfindung vor, dass wenigstens ein Prozessparameter, insbesondere der Wassergehalt und/oder der pH-Wert, mittels Nahinfrarotspektroskopie gemessen und die gemessenen Werte des wenigstens einen Prozessparameters an eine Steuerungseinheit zur Prozessoptimierung und/oder zur prozessoptimierten Steuerung des Verfahrens bzw. der Herstellung der Holzwerkstoffplatte gesendet werden, wobei die Messung des wenigstens einen Prozessparameters an einer oder mehreren Positionen erfolgt, ausgewählt aus einer Position unmittelbar vor dem Beleimen, insbesondere zwischen einem Trockenrohspanbunker und der Beleimstation, einer Position unmittelbar nach dem Beleimen, insbesondere zwischen der Beleimstation und einem Spanmaterialverteiler und/oder einer Streustation, einer Position bei dem Bereitstellen unmittelbar nach einem Holzplatz, insbesondere zwischen dem Holzplatz und einem nachfolgenden Trockner, und/oder einer Position bei dem Bereitstellen unmittelbar nach einem Trockner, insbesondere zwischen dem Trockner und einer Siebstation und/oder einem Trockenrohspanbunker.

Die erfindungsgemäße Vorrichtung zum prozessoptimierten Herstellen von Holzwerkstoffplatten und bevorzugt von Spanplatten, insbesondere mittels des erfindungsgemäßen Verfahrens, weist bevorzugt einen Holzplatz und/oder einen Trockenrohspanbunker zum Bereitstellen von Rohspanmaterial, wenigstens eine Beleimstation zum Beleimen des Rohspanmaterials, wenigstens eine Streustation zum Aufstreuen des beleimten Spanmaterials zum Bilden eines Formstrangs, insbesondere auf ein Transportband, sowie eine Presse, insbesondere eine kontinuierliche Presse, zum Pressen des Formstrangs zu einer Holzwerkstoffplatte auf. Weiterhin umfasst die Vorrichtung wenigstens ein Nahinfrarotmessgerät zum Messen wenigstens eines Prozessparameters, insbesondere des Wassergehalts und/oder des pH-Werts, und bevorzugt zudem wenigstens eine Steuereinheit, um die gemessenen Werte des wenigstens einen Prozessparameters zur Prozessoptimierung und/oder zur prozessoptimierten Steuerung des Verfahrens bzw. der Herstellung der Holzwerkstoffplatte zu verwenden, wobei ein Nahinfrarotmessgerät oder mehrere Nahinfrarotmessgeräte jeweils unmittelbar vor der Beleimstation, insbesondere zwischen einem Trockenrohspanbunker und der Beleimstation, unmittelbar nach der Beleimstation, insbesondere zwischen der Beleimstation und einem Spanmaterialverteiler und/oder der Streustation, unmittelbar nach dem Holzplatz, insbesondere zwischen dem Holzplatz und einem nachfolgenden Trockner, und/oder unmittelbar nach einem Trockner, insbesondere zwischen dem Trockner und einer Siebstation und/oder dem Trockenrohspanbunker angeordnet ist bzw. sind.

Das erfindungsgemäße Verfahren und die erfindungsgemäße Vorrichtung ermöglichen eine besonders schnelle und effiziente Optimierung des Herstellungsverfahrens von Holzwerkstoffplatten auf Basis der mittels Nahinfrarotspektroskopie gemessenen Prozessparameter. Hierdurch wird in einfacher Weise einerseits eine Qualitätsverbesserung und andererseits dann auch nachfolgend eine Qualitätssicherung erreicht. Durch eine erheblich verringerte Reaktionszeit auf nicht optimale Einstellungen und Steuergrößen kann der im Rahmen einer kontinuierlichen Produktion sich ergebende Ausschuss und zudem eine Steigerung der Prozessstabilität, selbst bei sich ändernden eingesetzten Materialien, wie dem Rohspanmaterial und dem Klebstoff, erreicht werden.

Unter einem prozessoptimierten Herstellen von Holzwerkstoffplatten wird erfindungsgemäß ein Prozess verstanden, bei dem die Möglichkeit besteht, wenigstens eine Steuergröße des Herstellungsprozesses aufgrund gemessener Werte wenigstens eines Prozessparameters, insbesondere als die primäre Regelgröße der Prozessoptimierung, derart zu optimieren, dass eine Holzwerkstoffplatte höherer Qualität und/oder mit gleichbleibend hoher Qualität trotz einer Änderung von Prozessparametern erhalten werden kann. Die primären bzw. bevorzugten Prozessparameter sind dabei die Feuchte bzw. der Wassergehalt und/oder der pH-Wert des gemessenen Materials, insbesondere des Rohspanmaterials, des beleimten Spanmaterials und/oder des Formstrangs.

Unter einem Bereitstellen von Rohspanmaterial wird ein Prozess verstanden, bei dem schlussendlich ein Spanmaterial erhalten wird, das unmittelbar beleimt und/oder zur Herstellung von Holzwerkstoffplatten verwendet werden kann. Dabei kann das Bereitstellen ein Herantransportieren von Rohspanmaterial von einem Holzplatz und/oder ein nachfolgendes Trocknen des vom Holzplatz kommenden Rohspanmaterials und/oder das Sieben des vorzugsweise getrockneten Rohspanmaterials in einer Siebstation und/oder ein Lagern des vorzugsweise getrockneten und/oder gesiebten Rohspanmaterials in einem Trockenspanbunker beinhalten. Zudem kann an einer beliebigen Verfahrensposition, vorzugsweise zwischen dem Holzplatz und dem Trockner und/oder dem Trockner unmittelbar nachfolgend auch ein Mittel zum Zerkleinern des Holzes bzw. des Grobspanmaterials vorgesehen sein.

Erfindungsgemäß ist ein Beleimen des Rohspanmaterials mit wenigstens einem Klebstoff und bevorzugt mit genau einem Klebstoff vorgesehen, was bevorzugt in einer Beleimstation erfolgt, die besonders bevorzugt einen Beleimmischer aufweist. Obwohl das Beleimen in beliebiger Weise erfolgen kann, wird bevorzugt dem in Bewegung befindlichen Rohspanmaterial wenigstens ein Klebstoff und bevorzugt genau ein Klebstoff zugegeben, was besonders bevorzugt durch Aufsprühen, insbesondere innerhalb eines Beleimmischers und/oder mittels eines sich im Inneren eines feststehenden Mischers bewegenden, insbesondere rotierenden Werkzeugs, erfolgt. Zugleich kann dem Rohspanmaterial auch noch Wasser zugegeben werden, was ebenfalls bevorzugt durch Aufsprühen, insbesondere innerhalb eines Beleimmischers, erfolgt. Bevorzugt ist der verwendete Klebstoff ein Harnstoff-Formaldehyd-Harz, ein MelaminFormaldehyd-Harz, ein Melamin Urea Formaldehyd (MUF) bzw. ein Melamin-Harnstoff-Formaldehyd-Harz oder ein Isocyanat.

Aus dem beleimten Spanmaterial wird nachfolgend ein Formstrang durch ein- oder mehrschichtiges Aufstreuen des Spanmaterials erzeugt, der dann nachfolgend durch Pressen und bevorzugt auch Erhitzen zu einer Holzwerkstoffplatte geformt wird. Das Pressen erfolgt dabei bevorzugt in einer kontinuierlich betriebenen Presse bzw. einer Kontipresse. Dem Pressen nachfolgend erfolgt bevorzugt ein Zuschnitt auf das gewünschte Plattenmaß.

Das Messen wenigstens eines Prozessparameters zur nachfolgenden Prozessoptimierung erfolgt vorzugsweise berührungslos und derart wechselwirkungsfrei, dass das gemessene Material nachfolgend weiterhin zur Herstellung einer Holzwerkstoffplatte verwendet werden kann. Erfindungsgemäß erfolgt wenigstens ein Teil dieser Messungen und bevorzugt alle Messungen mittels Nahinfrarotspektroskopie (NIRS).

Unter Nahinfrarotspektroskopie im Sinne der Erfindung wird grundsätzlich eine spektroskopische Untersuchung verstanden, die das zu untersuchende Material auch im Nahinfrarotbereich und bevorzugt ausschließlich im Nahinfrarotbereich analysiert. Unter dem Nahinfrarotbereich wird bevorzugt der Wellenlängenbereich zwischen 700 nm und 3000 nm, besonders bevorzugt zwischen 760 nm und 2500 nm und ganz besonders bevorzugt zwischen 780 nm und 2500 nm verstanden. Vorrangig wird die Nahinfrarotspektroskopie zur Bestimmung der Feuchte bzw. des Wassergehaltes des Holzes, der bereitgestellten Holzspäne, der bereits befeuchteten und/oder beleimten Holzspäne und/oder eines beliebigen Materials an einem beliebigen Prozessschritt der Herstellung einer Holzwerkstoffplatte eingesetzt.

Bevorzugt erfolgt die Nahinfrarotspektroskopie mittels eines Nahinfrarotspektrometers, wobei grundsätzlich auch eine Messung lediglich mittels eines Nahinfrarotspektroskops denkbar wäre. Entsprechend ist das erfindungsgemäße Nahinfrarotmessgerät bevorzugt ein Nahinfrarotspektroskop bzw. ein Nahinfrarotspektrometer und/oder bevorzugt ein Online-Nahinfrarot-Messgerät, das besonders bevorzugt gebildet ist, kontinuierlich bzw. periodisch Nahinfrarot-Messungen durchzuführen. Zusätzlich können auch anlassbezogene Messungen erfolgen, beispielsweise wenn ein Benutzer eine solche Messung auslöst und/oder wenn im Rahmen einer automatischen oder manuellen Qualitätskontrolle eine Verschlechterung der Produktqualität erkannt wird.

Erfindungsgemäß ist jeweils ein Nahinfrarotmessgerät an wenigstens einer, bevorzugt mehreren und besonders bevorzugt allen system- bzw. prozessrelevanten Positionen des Rohspanfertigungsprozesses und/oder des Herstellungsprozesses der Holzwerkstoffplatte angeordnet. Dabei wird als prozessrelevante Position grundsätzlich jede Position verstanden, an der die Eigenschaften und messbaren Prozessparameter des gemessenen Materials gegenüber einer vorhergehenden Messposition verändert wurden. Hierbei sind besonders relevante Positionen die Position nach dem Bereitstellen des Rohspanmaterials, vor und/oder nach dem Beleimen, vor und/oder nach dem Aufstreuen des beleimten Spanmaterials und/oder unmittelbar vor und/oder nach dem Pressen des beleimten und aufgestreuten Spanmaterials.

Die Optimierung des Herstellungsprozesses erfolgt schließlich innerhalb einer Steuerungseinheit, die unmittelbar an der Vorrichtung, aber auch getrennt davon angeordnet sein kann. Bevorzugt ist die Steuerungseinheit eine speicherprogrammierbare Steuerung (SPS), wobei es sich jedoch auch um eine beliebige andere Recheneinheit, um einen Computer oder sogar um ein Rechenzentrum handeln kann. Die Prozessoptimierung erfolgt dabei auf Basis wenigstens eines Teils der gemessenen Werte wenigstens eines Teils der Prozessparameter. Bevorzugt erfolgt die Optimierung auf Basis aller messbaren bzw. gemessenen Prozessparameter und/oder unter Berücksichtigung aller gemessenen Werte des jeweiligen Prozessparameters.

Bei einer bevorzugten Weiterbildung des erfindungsgemäßen Verfahrens werden als Prozessparameter neben dem Wassergehalt und/oder dem pH-Wert auch die auf das Rohspanmaterial aufgetragene Klebstoffmenge und/oder die Holzart mittels Nahinfrarotspektroskopie gemessen. Grundsätzlich kann eine Messung jedes Prozessparameters mittels Nahinfrarotspektroskopie und/oder mittels eines einzelnen Nahinfrarotmessgeräts erfolgen. Zudem kann auch eine Messung mehrerer, insbesondere aller Prozessparameter zugleich bzw. mittels eines einzigen Nahinfrarotmessgeräts erfolgen. Bevorzugt werden mittels jedem Nahinfrarotmessgerät alle Prozessparameter erfasst, die an der jeweiligen Position des Prozesses sinnvoll erfassbar sind. So ist beispielsweise ein Erfassen der Klebstoffmenge erst nach dem Beleimen des Rohspanmaterials sinnvoll möglich. Entsprechendes gilt für alle Prozessparameter, wobei insbesondere die Feuchte bzw. der Wasseranteil an jeder einzelnen Position gemessen werden sollte, da sich dieser Prozessparameter aufgrund der Verfahrensführung und insbesondere aufgrund von Wasserzugabe und/oder einem Trocknen aufgrund von Wärmeeintrag kontinuierlich im Verfahrensverlauf ändern kann. Eine mehrfache Holzartbestimmung erscheint zunächst nur an einer einzigen Position sinnvoll, da sich die Zusammensetzung im Prozessverlauf nicht ändern sollte, wobei jedoch bei der Verwendung verschiedener Holzarten zugleich auch im Verfahrensverlauf Informationen über die gleichmäßige Verteilung und das erfolgreiche Mischen bzw. über ein Entmischen erhaltbar sind. Entsprechend kann die Messung der Holzart sowohl nur einmalig, aber auch mehrfach oder sogar mittels jedes Nahinfrarotmessgeräts erfolgen.

Eine vorteilhafte Weiterbildung des erfindungsgemäßen Verfahrens sieht vor, dass wenigstens unmittelbar nach dem Beleimen des Rohspanmaterials eine Messung mittels Nahinfrarotspektroskopie erfolgt, um Informationen über die auf dem Rohspanmaterial aufgebrachte Klebstoffmenge und/oder über den aktuellen Wassergehalt des beleimten Spanmaterials zu erhalten. Die Information über die auf dem Rohspanmaterial aufgebrachte Klebstoffmenge erfolgt dabei bevorzugt ebenfalls über eine Bestimmung des Wassergehalts, wobei bei einem bekannten Wassergehalt vor dem Beleimen und gegebenenfalls einer bekannten Menge zusätzlich zugegebenen Wassers in der Beleimstation, die Menge des Klebstoffs in dem beleimten Spanmaterial bestimmbar ist. Mittels der an dieser Position des Verfahrens gemessenen Prozessparameter kann dann nahezu in Echtzeit die Menge des zugegebenen Klebstoffs und/oder zusätzlich zugeführten Wassers geregelt werden.

Obwohl Messungen des wenigstens einen Prozessparameters mittels Nahinfrarotspektroskopie an beliebigen Positionen des Verfahrens erfolgen können, ist es bevorzugt, dass wenigstens eine weitere Messung des wenigstens einen Prozessparameters mittels Nahinfrarotspektroskopie nach dem Aufstreuen des beleimten Spanmaterials bzw. nach der Streustation und vor dem Pressen zu einer Holzwerkstoffplatte erfolgt. Durch ein Messen unmittelbar vor der Presse wird eine vollständige Optimierung des Herstellungsprozesses ermöglicht, da sich die Materialeigenschaften der fertigen Holzwerkstoffplatte unmittelbar aus den Eigenschaften des beleimten Spanmaterials vor dem Pressen ergeben.

Um in vorteilhafter Weise den Ausschuss bzw. die produzierten Holzwerkstoffplatten mit nicht optimalen Produkteigenschaften oder nicht der höchsten Produktqualität so gering wie möglich zu halten, wird bei einer vorteilhaften Ausgestaltung des erfindungsgemäßen Verfahrens auf Basis der mittels Nahinfrarotspektroskopie gemessenen Prozessparameter, insbesondere mittels der Steuerungseinheit, eine Prozessoptimierung vorgenommen, sodass eine Anpassung des Verfahrens zum Herstellen von Holzwerkstoffplatten innerhalb eines Zeitraums von weniger als 20 Minuten, bevorzugt von weniger als 15 Minuten, besonders bevorzugt von weniger als 10 Minuten und ganz besonders bevorzugt von weniger als 5 Minuten ermöglicht wird.

Gemäß einer bevorzugten Ausführung des erfindungsgemäßen Verfahrens erfolgt zur Prozessoptimierung eine Korrelation der einzelnen Prozessparameter auf jeweilige Steuergrößen, wobei bevorzugt innerhalb der Steuerungseinheit die gemessenen Werte der Prozessparameter aller Nahinfrarotmessgeräte zur Berechnung der Steuergrößen genutzt und die errechneten Steuergrößen zum geregelten Betrieb des Verfahrens zum Herstellen von Holzwerkstoffplatten und/oder einer Vorrichtung zum Herstellen von Holzwerkstoffplatten verwendet werden. Entsprechend ist eine Korrelation der gemessenen Werte der Prozessparameter retrograd im Herstellungsprozess bevorzugt.

Grundsätzlich ist weiterhin denkbar, dass jedem Prozessparameter genau eine Steuergröße zugeordnet ist oder dass eine oder mehrere Steuergrößen mittels mehrerer oder aller Prozessparameter berechnet werden. Eine direkte Zuordnung besteht beispielsweise zwischen einer gemessenen Holzart und der Steuerung der Zugabe und/oder der Mischung des bereitgestellten Rohspanmaterials. Dagegen kann die Menge des zugegebenen Klebstoffs und/oder die Klebstoffzusammensetzung und/oder eine Menge des beim Beleimen zusätzlich zuzugebenden Wassers von mehreren Prozessparametern abhängig bestimmt werden, wobei insbesondere der Wassergehalt an verschiedenen Positionen des Prozesses, aber auch die verwendete Holzart, der pH-Wert und/oder die nach dem Beleimen auf dem Spanmaterial verbleibende Klebstoffmenge hier maßgeblich sein können. In Abhängigkeit des pH-Wertes kann weiterhin beispielsweise die Klebstoffmenge, die Klebstoffzusammensetzung und/oder die Klebstoffart eingestellt werden.

Zudem kann auf Basis der gemessenen Werte der Prozessparameter eine Anpassung weiterer Steuergrößen, wie beispielsweise der Pressdauer, des Pressdrucks, der Presstemperatur, der aufzustreuenden Menge des beleimten Spanmaterials und/oder der Transportgeschwindigkeit, erfolgen.

Bevorzugt erfolgt die Prozessoptimierung, insbesondere in der Steuerungseinheit, als selbstlernender Prozess, als automatisch geregelter Prozess und/oder unter Verwendung einer künstlichen Intelligenz, wobei bevorzugt ein Benutzereingriff, insbesondere in Form von hinterlegbaren Offset-Werten und/oder Grenzwerten, ermöglicht wird. Eine Prozessoptimierung als ein automatisch geregelter Prozess erfolgt dabei bevorzugt als eine Regelung auf festgelegte Zielwerte, wie eine Zielfeuchte und/oder eine Zielbeleimungsmenge, an einer definierten Position des Prozesses. Die vom Benutzer hinterlegten Grenzwerte können dabei Minimalwerte und/oder Maximalwerte für eine Zielgröße sein, insbesondere um den Prozess innerhalb erwünschter und/oder technisch sinnvoller Grenzen zu halten.

Zur Optimierung des Verfahrens wird bevorzugt ein Datenmodell in der Steuerungseinheit, in der speicherprogrammierbaren Steuerung und/oder in einem beliebigen anderen Computer gebildet. Zusätzlich oder alternativ kann der Aufbau einer Datenbank mit den erfassten Messwerten, weiteren erfassten Prozessgrößen und/oder den Steuergrößen des Prozessablaufs sowie gegebenenfalls auch Daten aus einer nachfolgenden Qualitätsprüfung der Holzwerkstoffplatten erfolgen. Eine solche Datenbank erlaubt dann nachfolgend besonders einfach, eine Optimierung mittels selbstlernender Prozesse oder durch den Einsatz künstlicher Intelligenz vorzunehmen, wobei dabei entwickelte Modelle und/oder erkannte Korrelationen wieder in die Echtzeit-Regelung des Herstellungsverfahrens zurückfließen können.

Eine vorteilhafte Ausgestaltung des erfindungsgemäßen Verfahrens sieht zudem vor, dass unmittelbar vor wenigstens einer, bevorzugt mehrerer und besonders bevorzugt aller Messungen mittels Nahinfrarotspektroskopie das zu messende Material, insbesondere das Rohspanmaterial, das beleimte Spanmaterial und/oder der Formstrang, egalisiert wird. Das Egalisieren erfolgt bevorzugt mittels eines Streifblechs bzw. mittels eines Egalisierungsblechs, das besonders bevorzugt sich wenigstens über den zu messenden Bereich und ganz besonders bevorzugt über die gesamte Breite des zu messenden Materials erstreckt. Das Streif- bzw. Egalisierungsblech erstreckt sich dabei derart über dem zu messenden Material, dass eine gleichmäßige Schichtdicke, eine ebene Oberfläche, eine gleichmäßig verdichtete Packung und/oder eine gleichmäßige Oberfläche erreicht wird. Entsprechend wird durch das Egalisieren die Qualität und die Zuverlässigkeit der gemessenen Werte erhöht, wobei insbesondere ein gleichbleibender Abstand des gemessenen Materials zu dem Nahinfrarotmessgerät maßgeblich ist.

Schließlich wird eine Gestaltung des erfindungsgemäßen Verfahrens bevorzugt, bei der zum Herstellen einer Holzwerkstoffplatte mit wenigstens einer Deckschicht und wenigstens einer Mittelschicht das Bereitstellen von Rohspanmaterial sowie das Beleimen des Rohspanmaterials für die Deckschicht und die Mittelschicht getrennt voneinander erfolgen und zum Herstellen von mehrschichtigen Holzwerkstoffplatten dann ein Aufstreuen des Materials für die einzelnen Schichten nacheinander erfolgt. Bevorzugt weist die Holzwerkstoffplatte eine Mittelschicht und beidseitig der Mittelschicht jeweils eine Deckschicht auf, wobei die Deckschichten zueinander identisch und/oder voneinander abweichend gebildet sein können. Soweit die beiden Deckschichten eine identische Zusammensetzung und/oder Beleimung haben, erfolgt bevorzugt ein gemeinsames Bereitstellen und Beleimen für alle Deckschichten bzw. alle Schichten mit identischer Zusammensetzung. Weiterhin bevorzugt erfolgen für jede Zusammensetzung des Spanmaterials und/oder für die wenigstens eine Deckschicht und die wenigstens eine Mittelschicht jeweils die Prozessschritte einschließlich Messungen mittels Nahinfrarotspektroskopie im Sinne der Erfindung getrennt voneinander.

Ebenfalls bevorzugt erfolgt das Zusammenfügen des beleimten Spanmaterials für die einzelnen Schichten unmittelbar vor dem Pressen und/oder in einer jeweiligen Streustation. Besonders bevorzugt ist dazu entlang einer Transportrichtung zunächst eine Streustation für eine untere Deckschicht, nachfolgend wenigstens eine Streustation für die Mittelschicht und schließlich eine weitere Streustation für eine obere Deckschicht vorgesehen, wobei die beiden Streustationen für die beiden Deckschichten gemeinsam mit einem identischen, beleimten Spanmaterial und/oder aus einem einzigen Verteiler und/oder einer einzigen Beleimstation versorgt werden können.

Insbesondere bevorzugt erfolgt auch das Aufbringen des beleimten Spanmaterials für die Mittelschicht mittels zunächst einer Streustation für das Spanmaterial der unteren Hälfte der Mittelschicht, gefolgt von einer zweiten Streustation für das Spanmaterial der oberen Hälfte der Mittelschicht. Abermals ist bevorzugt, dass die beiden Streustationen für die beiden Mittelschichthälften gemeinsam mit einem identischen, beleimten Spanmaterial und/oder aus einem einzigen Verteiler und/oder einer einzigen Beleimstation versorgt werden.

Eine vorteilhafte Weiterbildung der erfindungsgemäßen Vorrichtung sieht vor, dass zusätzlich zu der oder den erfindungsgemäßen Nahinfrarotmessgeräten ein weiteres Nahinfrarotmessgerät nach der Streustation und vor der Presse angeordnet ist und/oder eine Vorrichtung zur Feuchtemessung des Rohspanmaterials am Holzplatz und/oder nach einem Trockner für das Rohspanmaterial und/oder vor einer Siebstation für das Rohspanmaterial vorgesehen ist. Die Vorrichtung zur Feuchtemessung des Rohspanmaterials kann dabei in beliebiger Weise die Feuchte bzw. den Wassergehalt des Rohspanmaterials bestimmen, wobei dies jedoch bevorzugt nicht mittels Nahinfrarotspektroskopie erfolgt.

Bezüglich des Messens von Material mittels Nahinfrarotspektroskopie bestehen grundlegend zwei unterschiedliche Möglichkeiten. Zum einen kann die Messung im laufenden Herstellungsprozess und dabei insbesondere ohne Störung des Herstellungsprozesses und/oder an dem beim Herstellungsprozess unmittelbar verwendeten Material durchgeführt werden. Zum anderen kann zu messendes Material aus dem Herstellungsprozess ausgeleitet bzw. separiert werden, wobei hier insbesondere auch ein Rückführen des zuvor gemessenen Materials in den Herstellungsprozess zurück denkbar ist.

Entsprechend ist eine Gestaltung der erfindungsgemäßen Vorrichtung bevorzugt, bei der wenigstens eine Messung mittels Nahinfrarotspektroskopie unmittelbar am Material im Herstellungsprozess und/oder ohne ein vorheriges Separieren bzw. Ausleiten des zu messenden Materials erfolgt, wobei der zu messende Materialstrom bevorzugt nicht verlangsamt und/oder vor, insbesondere unmittelbar vor der Messung egalisiert wird.

Alternativ oder zusätzlich für wenigstens einen Teil der vorzunehmenden Messungen kann auch eine Fördervorrichtung für das mittels Nahinfrarotspektroskopie zu messende Material vorgesehen sein und/oder das zu messende Material vor der Messung dem übrigen Material, insbesondere dem übrigen Rohspanmaterial oder dem übrigen beleimten Spanmaterial, entnommen werden. Bei dieser Ausgestaltung der Vorrichtung und des Verfahrens wird das zu messende Material also zunächst separiert und bevorzugt eine Bypass-Strecke zugeführt und dort gemessen, wobei besonders bevorzugt das gemessene Material nachfolgend wieder in den Herstellungsprozess zurückgeführt wird. Die Fördervorrichtung ist dabei bevorzugt ein Förderband und/oder weist quer zur Transportrichtung verlaufende Rippen auf.

Ein Separieren bzw. Ausleiten des zu messenden Materials erlaubt dabei in besonders einfacher Weise ein Egalisieren des Materials und/oder ein Glattstreichen des Materials und/oder ein Bringen des Materials auf eine vorgegebene und gegebenenfalls von dem Formstrang abweichende Strangdicke bzw. Strangdichte. Zudem ist ein Verlangsamen oder sogar ein zeitweiliges Anhalten des zu messenden Materials, insbesondere zur Messung denkbar, wobei jedoch grundsätzlich ein Messen ohne eine Verlangsamung bevorzugt ist.

Generell ist auch denkbar, dass ein Teil der Messungen mittels Nahinfrarotspektroskopie mit separiertem Material und ein Teil der Messungen mittels Nahinfrarotspektroskopie direkt im Prozessablauf stattfindet. Ein Separieren von Material ist insbesondere bevorzugt für das gerade beleimte Spanmaterial unmittelbar nachfolgend zur Beleimung bzw. unmittelbar nachfolgend der Beleimstation.

Schließlich sieht eine vorteilhafte Ausgestaltung der erfindungsgemäßen Vorrichtung vor, dass wenigstens ein Nahinfrarotmessgerät, bevorzugt ein Teil der Nahinfrarotmessgeräte und besonders bevorzugt alle Nahinfrarotmessgeräte höhenverstellbar und/oder an einer Schiene traversierend, insbesondere dabei rechtwinklig zur Transportrichtung des zu messenden Materials verschieblich, angeordnet sind. Die Höhenverstellung und/oder das Traversieren kann dabei manuell erfolgen, wobei es bevorzugt ist, dass dies zusätzlich oder ausschließlich motorisch erfolgt, insbesondere um ein präzises Anfahren einer oder mehrerer Messpositionen zu ermöglichen. Die Höheneinstellung ist dabei bevorzugt derart gebildet, dass die Oberfläche des zu messenden Materials, insbesondere unabhängig von der Schichtdicke des zu messenden Materials, grundsätzlich aus einer Höhe zwischen 50 mm und 750 mm, besonders bevorzugt zwischen 100 mm und 500 mm, ganz besonders bevorzugt zwischen 200 mm und 300 mm und insbesondere aus einer Höhe von 250 mm messbar ist.

Ein Ausführungsbeispiel wird nachstehend mit Bezug auf die Zeichnung näher beschrieben. In der Figur zeigt:

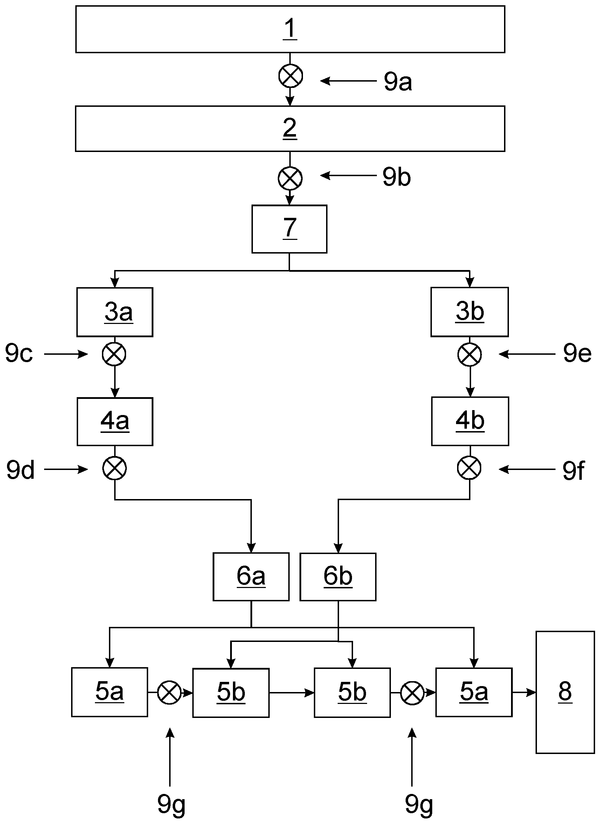

- Fig. 1: ein schematisches Diagramm der Anordnung der einzelnen Komponenten und des Ablaufs des Herstellungsverfahrens mit den Positionen der jeweiligen Nahinfrarotspektroskopie-Messung.

Bei einer schematisch und vereinfacht in der Fig. 1 dargestellten Anlage zum Herstellen einer Spanplatte wird zunächst ein Rohspanmaterial von einem Holzplatz 1 in Richtung eines Trockners 2 transportiert. Bei dem Transport auf einem Transportband wird das Rohspanmaterial mittels eines Streifblechs egalisiert und dann mittels eines ersten Nahinfrarotmessgeräts 9a aus einem Abstand von etwa 25 cm während des Transports gemessen. Aus den Messdaten wird wenigstens als Prozessparameter die Holzfeuchte und bevorzugt auch die Holzart sowie gegebenenfalls auch der pH-Wert bestimmt.

Im Trockner 2 erfolgt eine Trocknung des Rohspanmaterials und nachfolgend wird abermals eine Messung mittels eines Nahinfrarotmessgeräts 9b vorgenommen, wobei die gleichen Prozessparameter wie vor dem Trocknen bestimmt werden. An dieser Position besteht jedoch der Unterschied, dass das zu messende Rohspanmaterial vor dem Messen mittels des Nahinfrarotmessgeräts 9b von dem übrigen Materialstrom ausgesondert und mittels eines Förderbands mit Rippen zu dem Nahinfrarotmessgerät 9b transportiert wird. Dabei wird das zu messende Rohspanmaterial wenigstens verlangsamt und bei Bedarf auch zeitweise angehalten, beispielsweise um ein vollständiges Auskühlen und/oder Ausdampfen des getrockneten Rohspanmaterials vor der Messung zu erlauben. Zudem findet auch abermals vor dem Messen eine Egalisierung statt. Das gemessene Rohspanmaterial wird nach der Messung dem übrigen Rohspanmaterial wieder zugeführt.

Nach dem Trockner 2 wird das getrocknete Rohspanmaterial in einer Siebstation 7 gesiebt und dann einem Rohspanbunker 3a für Deckschichtmaterial und einem Rohspanbunker 3b für Mittelschichtmaterial zugeführt. Zum Bilden einer mehrschichtigen Spanplatte und/oder einer Spanplatte mit einer von den beiden außenliegenden Deckschichten abweichenden Mittelschicht, ist es sinnvoll nach dem Sieben das Material für die beiden Deckschichten und die wenigstens eine, bevorzugt ebenfalls in eine untere Mittelschicht und eine obere Mittelschicht getrennt aufgetragene Mittelschicht getrennt zu behandeln. Dabei kann die Mittelschicht eine abweichende Größenverteilung und/oder mittlere Größe des Rohspanmaterials, eine abweichende Qualität des Rohspanmaterials und/oder eine abweichende Holzzusammensetzung aufweisen.

Beim Verlassen des jeweiligen Rohspanbunkers 3a, b wird das getrocknete und gesiebte Rohspanmaterial abermals mittels eines Nahinfrarotmessgeräts 9c, e gemessen, wobei als Prozessparameter abermals vorzugsweise wenigstens die Holzfeuchte und/oder der pH-Wert bestimmt werden. Das Rohspanmaterial wird dann einer Beleimstation 4a, b zugeführt und dort in einem Beleimmischer mit einer definierten Menge Klebstoff sowie bedarfsweise unter Zugabe einer geringen Menge Wasser mittels eines rotierenden Werkzeugs gemischt. Beim Verlassen der Beleimstation 4a, b erfolgt dann eine weitere Messung mittels eines Nahinfrarotmessgeräts 9d, f, insbesondere um die aufgetragene und auf dem Spanmaterial verbleibende Klebstoffmenge als Prozessparameter zu bestimmen. Dabei wird vorzugsweise auch abermals der Wassergehalt des beleimten Spanmaterials und gegebenenfalls auch der pH-Wert bestimmt.

Über einen jeweiligen Spanmaterialverteiler 6a, b wird das Deckschichtmaterial und das Mittelschichtmaterial dann vier Streustationen 5a, b zugeleitet und dabei schichtweise ein Formstrang zum Bilden einer Spanplatte aufgestreut. Zwischen dem Aufstreuen des Spanmaterials eines Teils oder aller einzelnen Schichten und/oder nach dem Aufstreuen und somit dem fertigen Bilden des Formstrangs erfolgt eine weitere Messung mittels eines Nahinfrarotmessgeräts 9g. Schließlich erfolgt dann ein Pressen des Formstrangs, insbesondere in einer kontinuierlichen Presse 8, zu einer Spanplatte.

Um bei einem Produktionswechsel, der beispielsweise dreimal am Tag erfolgen kann, den Ausschluss so gering wie möglich zu halten sowie um die Produktqualität auch bei sich ändernden Ausgangsmaterialien, wie einer leichten Änderung der Holzzusammensetzung, der Holzart oder der Holzfeuchte, und/oder sich ändernden Umgebungsparametern, wie der Umgebungstemperatur oder der Luftfeuchte, die Spanplatten in gleichbleibend sehr hoher Qualität herstellen zu können, ist vorgesehen, dass sämtliche mittels der Nahinfrarotmessgeräte 9a- g aufgenommenen Messwerte der Prozessparameter, insbesondere der Holzart, der Feuchte, des pH-Wertes und der aufgetragenen Klebstoffmenge, an eine Steuervorrichtung übertragen werden und von dort aus in Echtzeit eine automatische Prozessoptimierung sowie eine Regelung der einzelnen Prozessschritte mit den gemessenen Prozessparametern als Regelgrößen erfolgt. Dabei können selbstverständlich auch Messwerte und Daten der Anlage sowie weiterer Sensoren berücksichtigt werden.

Dabei ist es vorteilhaft, wenn mittels Daten, die über einen längeren Zeitraum gemessen und in einer Datenbank abgelegt wurden, ein Datenmodell des Prozessablaufs unter Berücksichtigung der Variationen aller Prozessparameter erstellt wird, wobei dies auch unter Einsatz künstlicher Intelligenz erfolgen kann.

### Bezugszeichenliste

- 1: Holzplatz
- 2: Trockner
- 3a: Rohspanbunker für Deckschichtmaterial
- 3b: Rohspanbunker für Mittelschichtmaterial
- 4a: Beleimstation für Deckschichtmaterial
- 4b: Beleimstation für Mittelschichtmaterial
- 5a: Streustation für Deckschichtmaterial
- 5b: Streustation für Mittelschichtmaterial
- 6a: Spanmaterialverteiler für Deckschichtmaterial
- 6b: Spanmaterialverteiler für Mittelschichtmaterial
- 7: Siebstation
- 8: Presse
- 9a - g: Nahinfrarotmessgerät

## Patentansprüche

1. Verfahren zum prozessoptimierten Herstellen von Holzwerkstoffplatten, insbesondere von Spanplatten, mit den Schritten:
- Bereitstellen von Rohspanmaterial von einem Holzplatz (1) und/oder aus einem Trockner (2) und/oder aus einem Trockenrohspanbunker (3a, b),
- Beleimen des Rohspanmaterials, insbesondere innerhalb einer Beleimstation (4a, b),
- Aufstreuen des beleimten Spanmaterials zum Bilden eines Formstrangs in einer Streustation (5a, b) und/oder auf ein Transportband,
- Pressen des Formstrangs zu einer Holzwerkstoffplatte,
**dadurch gekennzeichnet, dass**
- wenigstens ein Prozessparameter, insbesondere der Wassergehalt und/oder der pH-Wert, mittels Nahinfrarotspektroskopie gemessen und
- die gemessenen Werte des wenigstens einen Prozessparameters an eine Steuerungseinheit zur Prozessoptimierung und/oder zur prozessoptimierten Steuerung des Verfahrens gesendet werden, wobei
- die Messung des wenigstens einen Prozessparameters an einer oder mehreren Positionen erfolgt, ausgewählt aus
a) unmittelbar vor dem Beleimen, insbesondere zwischen einem Trockenrohspanbunker (3a, b) und der Beleimstation (4a, b),
b) unmittelbar nach dem Beleimen, insbesondere zwischen der Beleimstation (4a, b) und einem Spanmaterialverteiler (6a, b) und/oder einer Streustation (5a, b),
c) bei dem Bereitstellen unmittelbar nach einem Holzplatz (1), insbesondere zwischen dem Holzplatz (1) und einem nachfolgenden Trockner (2), und/oder
d) bei dem Bereitstellen unmittelbar nach einem Trockner (2), insbesondere zwischen dem Trockner (2) und einer Siebstation (7) und/oder einem Trockenrohspanbunker (3a, b).

2. Verfahren zum prozessoptimierten Herstellen von Holzwerkstoffplatten nach Anspruch 1, **dadurch gekennzeichnet, dass** als Prozessparameter neben dem Wassergehalt und/oder dem pH-Wert auch die auf das Rohspanmaterial aufgetragene Klebstoffmenge und/oder die Holzart mittels Nahinfrarotspektroskopie gemessen werden.

3. Verfahren zum prozessoptimierten Herstellen von Holzwerkstoffplatten nach Anspruch 1 oder 2, **dadurch gekennzeichnet, dass** wenigstens unmittelbar nach dem Beleimen des Rohspanmaterials eine Messung mittels Nahinfrarotspektroskopie erfolgt, um Informationen über die auf dem Rohspanmaterial aufgebrachte Klebstoffmenge und/oder über den aktuellen Wassergehalt des beleimten Spanmaterials zu erhalten.

4. Verfahren zum prozessoptimierten Herstellen von Holzwerkstoffplatten nach wenigstens einem der vorhergehenden Ansprüche, **dadurch gekennzeichnet, dass** wenigstens eine weitere Messung des wenigstens einen Prozessparameters mittels Nahinfrarotspektroskopie nach dem Aufstreuen des beleimten Spanmaterials und vor dem Pressen zu einer Holzwerkstoffplatte erfolgt.

5. Verfahren zum prozessoptimierten Herstellen von Holzwerkstoffplatten nach wenigstens einem der vorhergehenden Ansprüche, **dadurch gekennzeichnet, dass** auf Basis der mittels Nahinfrarotspektroskopie gemessenen Prozessparameter mittels der Steuerungseinheit eine Prozessoptimierung vorgenommen wird, sodass eine Anpassung des Verfahrens zum Herstellen von Holzwerkstoffplatten innerhalb eines Zeitraums von weniger als 15 Minuten ermöglicht wird.

6. Verfahren zum prozessoptimierten Herstellen von Holzwerkstoffplatten nach wenigstens einem der vorhergehenden Ansprüche, **dadurch gekennzeichnet, dass** zur Prozessoptimierung eine Korrelation der einzelnen Prozessparameter auf jeweilige Steuergrößen erfolgt, wobei bevorzugt innerhalb der Steuerungseinheit alle mittels Nahinfrarotspektroskopie gemessenen Werte der Prozessparameter zur Berechnung der Steuergrößen genutzt und die errechneten Steuergrößen zum geregelten Betrieb des Verfahrens verwendet werden.

7. Verfahren zum prozessoptimierten Herstellen von Holzwerkstoffplatten nach wenigstens einem der vorhergehenden Ansprüche, **dadurch gekennzeichnet, dass** die Prozessoptimierung in der Steuerungseinheit als selbstlernender Prozess, als automatisch geregelter Prozess und/oder unter Verwendung einer künstlichen Intelligenz erfolgt, wobei bevorzugt ein Benutzereingriff, insbesondere in Form von hinterlegbaren Offset-Werten und/oder Grenzwerten, ermöglicht wird.

8. Verfahren zum prozessoptimierten Herstellen von Holzwerkstoffplatten nach wenigstens einem der vorhergehenden Ansprüche, **dadurch gekennzeichnet, dass** unmittelbar vor wenigstens einer Messung mittels Nahinfrarotspektroskopie das zu messende Material egalisiert wird.

9. Verfahren zum prozessoptimierten Herstellen von Holzwerkstoffplatten nach wenigstens einem der vorhergehenden Ansprüche, **dadurch gekennzeichnet, dass** zum Herstellen einer Holzwerkstoffplatte mit wenigstens einer Deckschicht und wenigstens einer Mittelschicht das Bereitstellen von Rohspanmaterial sowie das Beleimen des Rohspanmaterials für die Deckschicht und die Mittelschicht getrennt voneinander erfolgen und zum Herstellen von mehrschichtigen Holzwerkstoffplatten dann ein Aufstreuen des Materials für die einzelnen Schichten nacheinander erfolgt.

10. Vorrichtung zum prozessoptimierten Herstellen von Holzwerkstoffplatten, insbesondere von Spanplatten, mit
- einem Mittel zum Heranführen von Rohspanmaterial von einem Holzplatz (1) und/oder aus einem Trockenrohspanbunker (3a, 3b),
- wenigstens einer Beleimstation (4a, b) zum Beleimen des Rohspanmaterials,
- wenigstens einer Streustation (5a, b) zum Aufstreuen des beleimten Spanmaterials zum Bilden eines Formstrangs,
- einer Presse (8) zum Pressen des Formstrangs zu einer Holzwerkstoffplatte, **gekennzeichnet durch**
- wenigstens ein Nahinfrarotmessgerät (9a - f) zum Messen wenigstens eines Prozessparameters, insbesondere des Wassergehalts und/oder des pH-Werts, wobei
- ein oder mehrere Nahinfrarotmessgeräte (9a - f)
a) unmittelbar vor der Beleimstation (4a, b), insbesondere zwischen einem Trockenrohspanbunker (3a, b) und der Beleimstation (4a, b),
b) unmittelbar nach der Beleimstation (4a, b), insbesondere zwischen der Beleimstation (4a, b) und einem Spanmaterialverteiler (6a, b) und/oder der Streustation (5a, b),
c) unmittelbar nach dem Holzplatz (1), insbesondere zwischen dem Holzplatz (1) und einem nachfolgenden Trockner (2), und/oder
d) unmittelbar nach einem Trockner (2), insbesondere zwischen dem Trockner (2) und einer Siebstation (7) und/oder dem Trockenrohspanbunker (3a, b)
angeordnet sind.

11. Vorrichtung zum prozessoptimierten Herstellen von Holzwerkstoffplatten nach Anspruch 10, **dadurch gekennzeichnet, dass** zusätzlich ein Nahinfrarotmessgerät (9g) nach der Streustation (5a, b) und vor der Presse (8) angeordnet ist und/oder eine Vorrichtung zur Feuchtemessung des Rohspanmaterials am Holzplatz (1) und/oder nach einem Trockner (2) für das Rohspanmaterial und/oder vor einer Siebstation (7) für das Rohspanmaterial vorgesehen ist.

12. Vorrichtung zum prozessoptimierten Herstellen von Holzwerkstoffplatten nach Anspruch 10 oder 11, **dadurch gekennzeichnet, dass** eine Fördervorrichtung für das mittels Nahinfrarotspektroskopie zu messende Material vorgesehen ist und/oder das zu messende Material vor der Messung dem übrigen Material, insbesondere dem übrigen Rohspanmaterial oder dem übrigen beleimten Spanmaterial, entnommen wird.

13. Vorrichtung zum prozessoptimierten Herstellen von Holzwerkstoffplatten nach wenigstens einem der Ansprüche 10 - 12, **dadurch gekennzeichnet, dass** wenigstens eine Messung mittels Nahinfrarotspektroskopie unmittelbar am Material im Herstellungsprozess und/oder ohne ein vorheriges Separieren des zu messenden Materials erfolgt, wobei der zu messende Materialstrom bevorzugt vor der Messung egalisiert und/oder nicht verlangsamt wird.

14. Vorrichtung zum prozessoptimierten Herstellen von Holzwerkstoffplatten nach wenigstens einem der Ansprüche 10 - 13, **dadurch gekennzeichnet, dass** wenigstens ein Teil der Nahinfrarotmessgeräte (9a - g) und bevorzugt alle Nahinfrarotmessgeräte (9a - g) höhenverstellbar und/oder an einer Schiene traversierend angeordnet sind.
